# EUROPÄISCHE PATENTSCHRIFT

(11) **EP 4 286 236 B1**
(45) Veröffentlichungstag und Bekanntmachung des Hinweises auf die Patenterteilung: **07.10.2026**
(21) Anmeldenummer: 23172030.1
(22) Anmeldetag: 08.05.2023
(51) Int. Cl.: B61D 23/00

(54) **FAHRZEUG MIT EINEM TRITTSYSTEM**
VEHICLE WITH A STEP SYSTEM
VÉHICULE AVEC UN SYSTÈME DE MARCHEPIED

(30) Priorität: 30.05.2022 DE 202022103042 U
(43) Veröffentlichungstag der Anmeldung: 06.12.2023
(73) Patentinhaber: Bode - Die Tür GmbH, 34123 Kassel (DE)
(72) Erfinder: CIMMINO, Marco, 37139 Adelebsen (DE); AREND, Ulrich, 34576 Homburg (DE)
(74) Vertreter: Patentanwälte Bauer Vorberg Kayser

(56) Entgegenhaltungen:
- EP-A1- 3 130 518
- WO-A1-2020/020559
- CN-A- 105 799 600
- CN-U- 202 783 218
- CN-U- 209 208 767
- CN-U- 211 107 418
- CN-U- 212 195 444
- DE-A1- 102015 122 174
- KR-A- 20050 120 608

## Beschreibung

Die vorliegende Erfindung betrifft ein Fahrzeug mit einem Trittsystem, das Trittsystem umfassend eine Trittplatte, die unterhalb einer Trittleistenkante des Fahrzeugs entlang einer sich senkrecht zur Trittleistenkante erstreckenden Ausschubachse von einer Einschub-Stellung in Richtung einer Ausschub-Stellung und umgekehrt bewegbar ist, wobei die Trittplatte eine trittbelastbare Trittfläche aufweist, auf welcher ein Anti-Rutsch Profil ausgebildet ist, wobei das Anti-Rutsch Profil eine Mehrzahl von Profilelementen aufweist, wobei ein jedes Profilelement in Bezug zu einem Trittflächen-Grund erhaben ist und entlang einer jeweiligen Profilelement-Längsachse eine größere Länge aufweist als entlang einer senkrecht zur Profilelement-Längsachse und parallel zum Trittflächen-Grund verlaufenden Profilelement-Querachse, wobei die Profilelemente in Reihen angeordnet sind und eine jede Reihe eine Reihenachse aufweist, entlang welcher eine Mehrzahl von Profilelementen fluchtend hintereinander angeordnet sind.

Trittsysteme mit zwischen einer Einschub-Stellung und Ausschub-Stellung bewegbaren Trittplatten kommen insbesondere bei Fahrzeugen zur Personenbeförderung zum Einsatz, z. B. im Bereich des öffentlichen Personenverkehrs. Infrage kommt beispielsweise eine Verwendung bei Straßenfahrzeugen (z. B. Bussen) oder Schienenfahrzeugen (z. B. Straßenbahnen, U-Bahnen, Trams, Nah- und Fernverkehrszügen, Hochgeschwindigkeitszügen etc.). Trittsysteme werden grundsätzlich zur Vereinfachung des Ein- und Aussteigens in ein Fahrzeug verwendet, sie dienen also als Zu- und Ausstiegshilfe. Während eines Halts eines Fahrzeugs (z. B.) an einem Haltesteig, beispielsweise einem Bahnsteig oder Bussteig, befindet sich das Fahrzeug in einer Ruheposition, sodass die Fahrgäste in das Fahrzeug eintreten bzw. das Fahrzeug verlassen können. Dabei ist es nahezu unvermeidlich, dass im Türbereich zwischen einer Fahrzeugaußenseite und dem Haltesteig ein Spalt überbrückt werden muss. Anderenfalls würde es unweigerlich zu einem Materialkontakt zwischen der Fahrzeugaußenseite und dem Haltesteig kommen, was zu einer Beschädigung des Fahrzeugs führen könnte, beispielsweise in Form von Blech- oder Lackschäden. Ist ein solcher Spalt zu groß, kann dies eine Gefahr bzw. Beeinträchtigung für die Fahrgäste beim Ein- und Aussteigen in das Fahrzeug bzw. aus dem Fahrzeug darstellen. Entsprechend stellen Trittsysteme, die im Ruhezustand des Fahrzeugs in Richtung des Haltesteigs ausgefahren oder ausgeklappt werden, eine Möglichkeit dar, die Spaltgröße zwischen Fahrzeug und Haltesteig bzw. Bahnsteig zu reduzieren. Ein solches Trittsystem kann beispielsweise als Trittplatte ausgebildet sein und nimmt beim Zu- oder Aussteigen von Fahrgästen die Gewichtskraft der Fahrgäste auf, wird also trittbelastet

Auch im Falle eines Fahrzeughalts an einer Stelle ohne eigens vorgesehenen Haltesteig (z. B. im Bereich eines Gehwegs) ist häufig ein Spalt und/oder eine Höhendifferenz zu überwinden. Hier kann ein Trittsystem (samt einer bewegbaren Trittplatte) den Ein- und Ausstieg in das Fahrzeug erleichtern. Gar im Falle eines Halts des Fahrzeugs auf ebenem Untergrund kann ein Trittsystem zumindest zur Überwindung einer Höhendifferenz zwischen dem ebenen Untergrund und dem Boden des Fahrgastraums dienen, dies gilt umso mehr für Fahrgäste mit körperlicher Beeinträchtigung, beispielsweise Rollstuhlfahrer. Hier dient die Trittplatte des Trittsystems als Rampe.

Um eine ausreichende Trittsicherheit für zu- oder aussteigende Fahrgäste zu gewährleisten, sowie eine möglichst lange Lebensdauer des Trittsystems bei Dauernutzung zu ermöglichen, ist erforderlich, dass das Trittsystem eine ausreichende mechanische Stabilität aufweist. Insbesondere eignen sich dazu Trittsysteme mit Trittplatten oder Trittflächen aus Metall. Des Weiteren können die Trittflächen mit Strukturen oder Matten versehen sein, die einen Anti-Rutscheffekt ausüben und die Rutschgefahr für den Fahrgast beim Ein- und Aussteigen reduzieren.

Zur Ausbildung eines Anti-Rutsch Profils wird häufig auf sogenannte Riffel-Bleche (z. B. aus Edelstahl) zurückgegriffen. Dabei ist auf einer Blechoberfläche (die zugleich eine Trittfläche bereitstellt) ein Anti-Rutsch Profil ausgebildet, nämlich in Form von einer Mehrzahl von Profilelementen, die jeweils in Bezug zu einem Trittflächen-Grund (des Blechs) erhaben sind und ein Riffel-Muster ausbilden. Die Riffelung (bereitgestellt durch die Profilelemente) entsteht bei der Herstellung des Bleches durch das Umformwalzen. Als von den Profilelementen ausgebildete Riffel-Muster sind beispielsweise Duett-Muster oder Quintett-Muster bekannt, die sich jeweils aus einer Vielzahl von Struktureinheiten zusammensetzen, die Struktureinheiten umfassend jeweils zwei oder fünf parallel ausgerichtete Profilelemente. Die Profilelemente benachbarter Struktureinheiten sind dabei in unterschiedliche Richtungen gerichtet, sodass sich ein Gesamt-Riffel-Muster ohne Richtungsgebundenheit ergibt. Zwar wird auch durch die Riffel-Muster ein Anti-Rutsch Effekt bereitgestellt, bei Verwendung derartiger Riffelbleche als Trittplatten in Trittsystemen, wurde festgestellt, dass sich die Riffelbleche oft nur unzureichend reinigen oder abkehren lassen. Von den Fahrgästen auf die Riffelbleche abgesonderte Schmutzpartikel (z. B. in Form von Staub, Steinen, Erde oder Split) verbleiben (auch nach dem Reinigen oder Abkehren) zwischen den Profilelementen der Riffelstrukturen. Entsprechend besteht ein Bedarf an diesbezüglich verbesserten Systemen.

Das Dokument CN 105 799 600 A zeigt beispielsweise eine Trittstufe, die auf ihrer begehbaren Oberseite als Rutschhemmung eine Musterstruktur aufweist. Diese Musterstruktur beinhaltet eine Vielzahl von länglichen Elementen, deren Langsachsen im 90°-Winkel zueinander und im 45°-Winkel zur Ausschubrichtung der Trittstufe angeordnet sind. Auch die Dokumente KR 2005 0120608 A und CN 202 783 218 U zeigen strukturierte begehbare Oberflächen.

Druckschrift EP 3 130 518 A1 betrifft ein Trittbrett für ein Schienenfahrzeug. Die darin beschriebene Trittfläche weist mehrere Zwischenräume auf, die geeignet sind, Schneematsch durch das Trittbrett hindurchrutschen zu lassen.

Somit liegt der vorliegenden Erfindung die Aufgabe zugrunde, ein Fahrzeug mit einem Trittsystem bereitzustellen, dessen Trittplatte sich auf vereinfachte Art und Weise und mit verbesserter Effizienz reinigen lässt.

Zur Lösung dieser Aufgabe wird ein Fahrzeug mit einem Trittsystem mit den Merkmalen des Anspruchs 1 vorgeschlagen. Die Beschreibung charakterisiert und spezifiziert die Erfindung insbesondere im Zusammenhang mit den Figuren zusätzlich.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Die erwähnte Trittleistenkante ist zwischen dem Bodenniveau eines Fahrzeuginnenraums und einem Hohlraum (z. B. Ausschubkasten) zur Aufnahme der Trittplatte angeordnet. Die Trittleistenkante kann beispielsweise Bestandteil der Fahrzeugaußenhaut oder eines Ausschubkastens sein. Im Speziellen ist die Trittplatte unterhalb einer Unterkante der Trittleistenkante angeordnet.

Die Bewegung der Trittplatte (die vorzugsweise als Schiebetritt ausgebildet ist) von einer Einschub-Stellung in Richtung einer Ausschub-Stellung und umgekehrt wird über eine geeignete Antriebseinrichtung bereitgestellt, die an dieser Stelle nicht weiter spezifiziert werden soll. Die Trittplatte kann absenkbar (schwenkbar) ausgebildet sein, um eine Rampenfunktion bereitzustellen.

Wie erwähnt, ist die Trittfläche trittbelastbar ausgebildet, was bedeutet, dass die Trittplatte, die von Fahrgästen auf die Trittplatte ausgeübte Gewichtskraft beim Ein- und Aussteigen aufnehmen kann. Unter einem "Anti-Rutsch Profil" ist zu verstehen, dass damit die Gefahr eines Ausrutschens eines Fahrgasts beim Ein- oder Aussteigen im Vergleich zu einer glatten Oberfläche verringert wird. Insbesondere metallische Oberflächen können (ohne entsprechende Profilierung) glatt sein und eine erhöhte Ausrutschgefahr bewirken. Dieser Effekt wird bei Nässe noch weiter verstärkt, weshalb Anti-Rutsch Profile bei Trittplatten nahezu unabdingbar sind. Denn durch den permanenten Kontakt mit Schuhen von Fahrgästen wird sowohl Schmutz als auch Feuchtigkeit auf die Trittplatte abgesondert. In der Ausschub-Stellung kann sich zudem unmittelbar Niederschlag wie Regen, Schnee, Hagel oder dergleichen auf der Trittplatte ablagern, wodurch die Rutschgefahr weiter erhöht werden kann. Dem wirkt das Anti-Rutsch Profil entgegen.

Wie erwähnt, sind die Profilelemente in Bezug zu dem Trittflächen-Grund erhaben. Dies meint, dass die Profilelemente in Bezug auf eine durch den Trittflächen-Grund gebildete Oberfläche nach oben herausragen bzw. abstehen. Mit anderen Worten weisen jene den Profilelementen zugehörige Profilelement-Oberflächen in Vertikalrichtung eine anderes (höheres) Vertikalniveau auf als der Trittflächen-Grund.

Wie erwähnt, weist ein jeweiliges Profilelement entlang seiner jeweiligen Profilelement-Längsachse eine größere Länge auf als in einer senkrecht zur Profilelement-Längsachse und parallel zum Trittflächen-Grund verlaufenden Profilelement-Querachse. Mit anderen Worten weisen die Profilelemente eine größere Länge als Breite auf. Auch weisen die Profilelemente eine größere Länge als Höhe (bezogen auf eine Höhe ausgehend vom Trittflächen-Grund) auf.

Durch die reihenweise Anordnung der Profilelemente wird eine richtungsgebundene Anordnung bereitgestellt, wodurch die Reinigung/Entfernung von in Zwischenräumen zwischen den Profilelementen abgesetzten Schmutzpartikeln (z. B. in Form von Staub, Steinen, Erde oder Split) erleichtert wird. Wird eine solche Trittplatte beispielsweise entlang der Ausrichtung der Profilelemente abgekehrt (also richtungsgebunden gereinigt), so lassen sich Schmutzpartikel einfacher entfernen als bei den aus dem Stand der Technik bekannten Riffelblechen.

Erfindungsgemäß weist eine jede Reihe eine Reihenachse auf, entlang welcher eine Mehrzahl von Profilelementen fluchtend hintereinander angeordnet sind. In einer jeweiligen Reihe sind die Profilelemente somit hintereinander aufgereiht. Erfindungsgemäß erstrecken sich die jeweiligen Profilelement-Längsachsen dabei in Richtung (d. h. parallel) zur Reihenachse. Die Reihen der hintereinander angeordneten Profilelemente können sich über die gesamte Länge der Trittplatte in einer Richtung entlang der Ausschubachse erstrecken. Dies bedeutet, dass in einer jeweiligen Reihe von einem hinteren Ende der Trittplatte bis zu einem vorderen Ende der Trittplatte Profilelemente hintereinander angeordnet bzw. aufgereiht sind.

Nach einer Ausgestaltung eines mit der Erfindung vorgeschlagenen Trittsystems kann vorgesehen sein, dass die Profilelemente nebeneinander angeordneter Reihen in einem Reihenabstand zueinander angeordnet sind. Der Reihenabstand kann für sämtliche benachbarte Reihen von Profilelementen gleich sein. Der Reihenabstand kann beispielsweise im Bereich von 1 mm bis 20 mm liegen, insbesondere 1 mm, 5 mm, 10 mm oder 20 mm. Gleichsam kann der Reihenabstand auch anderweitige Werte annehmen. Je nach Reihenabstand können sich Schmutzpartikel unterschiedlicher Größe (z. B. Korngröße) zwischen den Reihen ansammeln. Folglich kann die Größe, der sich ablagernden Schmutzpartikel über den Reihenabstand eingestellt werden. Je nach Kundenanforderung oder Anwendung kann der Reihenabstand variieren.

Nach einer weiteren Ausgestaltung eines mit der Erfindung vorgeschlagenen Trittsystems kann vorgesehen sein, dass die in einer jeweiligen Reihe fluchtend hintereinander angeordneten Profilelemente in einem Abstand zueinander oder unmittelbar aneinander angrenzend angeordnet sind. Bei unmittelbar aneinander angrenzender Anordnung kann bezogen auf zwei hintereinander angeordnete Profilelemente, also ein vorderes und hinteres Profilelement, ein hinteres Ende des vorderen Profilelements an ein vorderes Ende des hinteren Profilelements unmittelbar angrenzen (d. h. in Materialkontakt stehen). Sind Profilelemente in einem Abstand zueinander angeordnet, findet kein Materialkontakt zwischen den Profilelementen statt.

Nach einer weiteren Ausgestaltung eines mit der Erfindung vorgeschlagenen Trittsystems kann vorgesehen sein, dass die Profilelemente jeweils eine trittbelastbare Profilelement-Trittfläche aufweisen, wobei die Mehrzahl der Profilelemente mit ihren jeweiligen Profilelement-Trittflächen eine zum Trittflächen-Grund parallele Profilelement-Trittflächen-Ebene aufspannen. Die Profilelemente sind vorzugsweise derart angeordnet, dass sie bei Betreten der Trittplatte durch einen Fahrgast zumindest teilweise und zeitweilig von einer Schuhsohle des Fahrgasts kontaktiert werden und somit zumindest teilweise als Trittfläche dienen. Die Profilelemente bilden somit mit ihren jeweiligen Profilelement-Trittflächen eine Gesamt-Profilelement-Trittfläche, deren Profilelement-Trittflächen-Ebene oberhalb des Trittflächen-Grunds angeordnet ist. Je nach Schuhprofil des Fahrgasts kann beim Betreten der Trittplatte sowohl der Trittplatten-Grund als auch ein Teil der Profilelement-Trittflächen mit der Schuhsohle in Kontakt stehen, sodass Teile einer Schuhsohle auf dem Trittplatten-Grund und Teile der Schuhsohle auf den Profilelement-Trittflächen aufliegen, was einen Anti-Rutsch Effekt bewirkt. Physikalisch kann der genannte Anti-Rutsch Effekt durch eine erhöhte Reibung zwischen Schuhsohle und profilierter Trittfläche oder durch teilweisen Formschluss zwischen Profilelementen und Schuhsohle begründet sein. Insgesamt ist festzuhalten, dass die Profilelemente der Trittplatte ein Profil verleihen, welches die Gefahr eines Ausrutschens bzw. Abrutschens eines Fahrgasts vermindert. Bei Feuchtigkeit kommt der Anti-Rutsch Effekt besonders zum Tragen, denn einerseits kann das mit der Trittplatte in Kontakt kommende Wasser über den Trittplattengrund abfließen, andererseits sammelt sich das Wasser eher am Trittplattengrund als auf einer Oberfläche der Profilelemente, weshalb die Profilelemente auch bei Nässe eine ausreichende Rutschfestigkeit bereitstellen. Auch kann auf den Profilelement-Oberflächen angesammeltes Wasser bei Kontakt mit einer Schuhsohle in Richtung des Trittflächen-Grunds verdrängt werden.

Nach einer weiteren Ausgestaltung eines mit der Erfindung vorgeschlagenen Trittsystems kann vorgesehen sein, dass die Profilelement-Trittfläche eines jeweiligen Profilelements eine Ovalform, eine Rechteckform, eine Ellipsenform oder eine spitze Ellipsenform aufweist. Eine zumindest teilweise abgerundete Profilform wie eine Ovalform, Ellipsenform oder die Form einer spitzen Ellipse kann vorteilhaft bei der Reinigung bzw. beim Abkehren der Trittplatte sein, da über die Trittplatte geführte Bürsten oder Borsten entlang der abgerundeten Profilelemente gleiten. Auch bei einer Rechteckform können Bürsten oder Borsten entlang einer Rechteckkante gleiten, allerdings ist die Gefahr eines Verhakens oder Verkeilens beim Vorbeigleiten der Bürsten oder Borsten - im Übergangsbereich zweier rechteckförmiger Profilelemente - erhöht. Im Gegensatz dazu ist eine zumindest teilweise abgerundete Profilform wie eine Ovalform, Ellipsenform oder die Form einer spitzen Ellipse für die Bürsten der Borsten besonders materialschonend, was deren Lebensdauer erhöht. Die Profilelemente können bereits bei Fertigung der Trittplatte in der gewünschten Form unmittelbar aus dem Trittplattenmaterial ausgebildet bzw. geformt werden.

Nach einer weiteren Ausgestaltung eines mit der Erfindung vorgeschlagenen Trittsystems kann vorgesehen sein, dass in zueinander benachbarten Reihen angeordnete Profilelemente längsversetzt angeordnet sind. Der Längsversatz bezieht sich dabei auf eine Richtung entlang der Ausschubachse, d. h. die Profilelemente in benachbarten Reihen sind nicht unmittelbar nebeneinander angeordnet (d. h. nicht parallel auf gleicher Höhe bzw. in gleichen Reihenposition angeordnet). Dadurch kann der Anti-Rutsch Effekt weiter erhöht werden. Nach einer weiteren Ausgestaltung eines mit der Erfindung vorgeschlagenen Trittsystems kann vorgesehen sein, dass zueinander benachbarte Reihen eine unterschiedliche Anzahl von Profilelementen umfassen. Auch dadurch lässt sich ein Längsversatz erzielen und der Anti-Rutsch Effekt verbessern. In Bezug auf eine vordere Kante der Trittplatte schließen benachbarte Profilelement-Reihen bei vorliegendem Längsversatz somit nicht auf gleicher Höhe ab. In anderen Worten kann somit jede zweite Reihe die gleiche Anordnung bzw. Anzahl von Profilelementen aufweisen. Nach einer weiteren Ausgestaltung eines mit der Erfindung vorgeschlagenen Trittsystems kann vorgesehen sein, dass eine in Bezug auf eine Reihe übernächste Reihe die gleiche Anzahl von Profilelementen umfasst. In anderen Worten kann somit jede zweite Reihe die gleiche Anzahl von Profilelementen umfassen.

Erfindungsgemäß erstrecken sich die Reihenachsen und somit auch die Profilelement-Längsachsen parallel zur Ausschubachse.

Das erfindungsgemäße Trittsystem sieht vor, dass an der Trittleistenkante eine Bürstenstruktur angeordnet ist, die Bürstenelemente aufweist, welche dazu eingerichtet sind, beim Bewegen der Trittplatte entlang der Ausschubachse die Trittfläche der Trittplatte zu reinigen. Eine Erstreckung der Reihenachsen (bzw. Profilelement-Längsachsen) parallel zur Ausschubachse ist dabei vorteilhaft für einen effizienten Reinigungseffekt. Denn Verunreinigungen bzw. Schmutzpartikel in Zwischenräumen zwischen benachbarten Reihen können somit effektiv von den Bürstenelementen abgekehrt werden. Beim Bewegen der Trittplatte kann ein Teil der Bürstenelemente entlang der zwischen den Reihen angeordneten Zwischenräume gleiten bzw. geführt werden. Gleichsam kann die Bürstenstruktur Bürstenelemente umfassen, die über die Oberflächen der Profilelemente gleiten bzw. geführt werden und somit auch diese reinigen. Die Bürstenelemente müssen somit zur Reinigung der Trittplatte nicht aktiv bewegt werden, vielmehr verbleiben diese positionsfest. In einer Variante kann aber vorgesehen sein, auch die Bürstenstruktur insgesamt relativ zur Trittplatte zu bewegen, beispielsweise gegenläufig zur Bewegungsrichtung der Trittplatte. Auch eine quer zur Ausschubachse der Trittplatte gerichtete Bewegung der Bürstenstruktur kann alternativ oder zusätzlich vorgesehen sein. Ferner können einzelne Bürstenelemente gegenläufig oder quer zur Bewegungsrichtung der Trittplatte bewegt werden. Ist eine Bewegung der Bürstenstruktur oder einzelner Bürstenelemente gewünscht, so sind diese entsprechend der gewünschten Bewegung beweglich gelagert und angetrieben. Vorstellbar ist ebenfalls einzelne Bürstenelemente (oder sämtliche Bürstenelemente) nicht-angetrieben, jedoch beweglich zu lagern, zum Beispiel über den jeweiligen Bürstenelementen zugeordnete Kugelgelenke.

Das erfindungsgemäße Fahrzeug mit einem Trittsystem weist eine Bürstenstruktur mit ersten Bürstenelementen und zweiten Bürstenelementen auf, wobei die ersten Bürstenelemente in Richtung der Trittplatte eine erste Länge aufweisen, und wobei die zweiten Bürstenelemente in Richtung der Trittplatte eine zweite Länge aufweisen, wobei die erste und zweite Länge voneinander abweichen. Nach einer weiteren Ausgestaltung eines mit der Erfindung vorgeschlagenen Trittsystems kann vorgesehen sein, dass die ersten Bürstenelemente dazu ausgebildet sind, beim Bewegen der Trittplatte entlang der Ausschubachse den Trittflächen-Grund zu kontaktieren, und wobei die zweiten Bürstenelemente dazu ausgebildet sind, beim Bewegen der Trittplatte entlang der Ausschubachse den Profilelement-Trittflächen zu kontaktieren. Jene zur Kontaktierung des Trittflächen-Grunds vorgesehenen Bürstenelemente weisen vorteilhafterweise eine größere Länge auf als jene zur Kontaktierung der Profilelement-Trittflächen (bzw. Profilelement-Oberflächen) vorgesehenen zweiten Bürstenelemente. Die ersten Bürstenelemente können somit den Trittflächen-Grund abkehren, während die zweiten Bürstenelemente die Profilelement-Trittflächen abkehren.

Es kann in einer weiteren Ausgestaltung vorgesehen sein, dass die ersten Bürstenelemente und die zweiten Bürstenelemente die jeweiligen Trittflächen-Gründe respektive Profilelement-Trittflächen nicht unmittelbar kontaktieren, sondern mit ihren unteren Enden in einem geringen Abstand dazu angeordnet sind. Auch dann lassen sich jene Partikel entfernen, die eine über den genannten Abstand hinausgehende Größe aufweisen.

Nach einer weiteren Ausgestaltung eines mit der Erfindung vorgeschlagenen Trittsystems kann vorgesehen sein, dass die ersten und zweiten Bürstenelemente jeweils in sich senkrecht zur Ausschubachse erstreckenden Bürstenelement-Reihen angeordnet sind, wobei die ersten Bürstenelemente in einer ersten Bürstenelement-Reihe und die zweiten Bürstenelemente in einer zweiten Bürstenelement-Reihe angeordnet sind. Dabei kann die erste Bürstenelement-Reihe und die zweite Bürstenelement-Reihe hintereinander angeordnet sein, wobei in einer ersten Variante die erste Bürstenelement-Reihe nach fahrzeugaußen eine vordere Reihe bereitstellen kann und die zweite Bürstenelement-Reihe nach fahrzeugaußen eine hintere Reihe bereitstellen kann. In einer zweiten Variante kann die zweite Bürstenelement-Reihe nach fahrzeugaußen eine vordere Reihe bereitstellen und die erste Bürstenelement-Reihe nach fahrzeugaußen eine hintere Reihe bereitstellen.

Nach einer weiteren Ausgestaltung eines mit der Erfindung vorgeschlagenen Trittsystems kann vorgesehen sein, dass die ersten Bürstenelemente und zweiten Bürstenelemente in einer oder mehreren sich senkrecht zur Ausschubachse erstreckenden Bürstenelement-Reihe(n) gemeinsam angeordnet sind, wobei die ersten und zweiten Bürstenelemente in einer jeweiligen Bürstenelement-Reihe alternierend angeordnet sind. Dies kann bedeuten, dass es sich bei jedem zweiten Bürstenelement um ein erstes respektive zweites Bürstenelement handeln kann.

Nach einer weiteren Ausgestaltung eines mit der Erfindung vorgeschlagenen Trittsystems kann vorgesehen sein, dass die ersten Bürstenelemente und die zweiten Bürstenelemente in Form von Borsten ausgebildet sind. Die Borsten können aus einem synthetischen oder natürlichen Material gefertigt sein. Natürliche Materialien können pflanzlicher oder tierischer Natur sein. Als Beispiel für ein natürliches Borstenmaterial seien Kokos- und Arenga-Borsten genannt. Borsten auf tierischer Basis können beispielsweise aus Rosshaar gefertigt sein. Synthetisch gefertigte Borsten können beispielsweise aus PVC, Polypropylen, Polyester, Polyamid oder ähnlichen Materialien gefertigt sein. Auch Kombinationen aus pflanzlichen und synthetischen Materialien können zur Fertigung von Borsten herangezogen werden. Bei den Borsten kann es sich somit um 1-Komponenten- oder Mehrkomponentenborsten handeln. Die Borsten können aus Verbundmaterialien gefertigt sein. Auch können die Borsten vollständig oder teilweise aus natürlichem oder synthetisch erzeugtem Gummi hergestellt sein.

Nach einer weiteren Ausgestaltung eines mit der Erfindung vorgeschlagenen Trittsystems kann vorgesehen sein, dass die ersten Bürstenelemente einen Borstendurchmesser aufweisen, der kleiner oder gleich dem Reihenabstand nebeneinander angeordneter Profilelemente ist. Sodann können die Zwischenräume zwischen den Reihen von Profilelementen beim Bewegen der Trittplatte an den jeweiligen ersten Bürstenelementen entlanggeführt und gereinigt werden. Weisen die ersten Bürstenelemente einen Borstendurchmesser auf, der kleiner als der genannte Reihenabstand ist, so können - je nach Borstendurchmesser - mehrere der ersten Bürstenelemente innerhalb eines zwischen zwei Reihen angeordneten Zwischenraums positioniert sein und bei Bewegen der Trittplatte entlang des Zwischenraums geführt werden.

Die Erfindung wird weiterhin anhand der nachfolgenden Figuren näher erläutert. Diese sind nur beispielhaft zu verstehen und sollen die Erfindung nicht beschränken.

Es zeigen:
- Fig. 1: eine Perspektivansicht eines Ausschnitts einer dem erfindungsgemäßen Trittsystem zugehörigen Trittplatte;
- Fig. 2: eine Perspektivansicht eines Ausschnitts einer dem erfindungsgemäßen Trittsystem zugehörigen Trittplatte samt an einer Trittleistenkante angeordneten Bürstenstruktur zur Reinigung der Trittplatte;
- Fig. 3: eine vergrößerte Perspektivansicht eines Ausschnitts einer dem erfindungsgemäßen Trittsystem zugehörigen Trittplatte samt Bürstenstruktur;
- Fig. 4: eine Vorderansicht auf eine Trittplatte nach Fig. 1 bis 3 samt Bürstenstruktur.

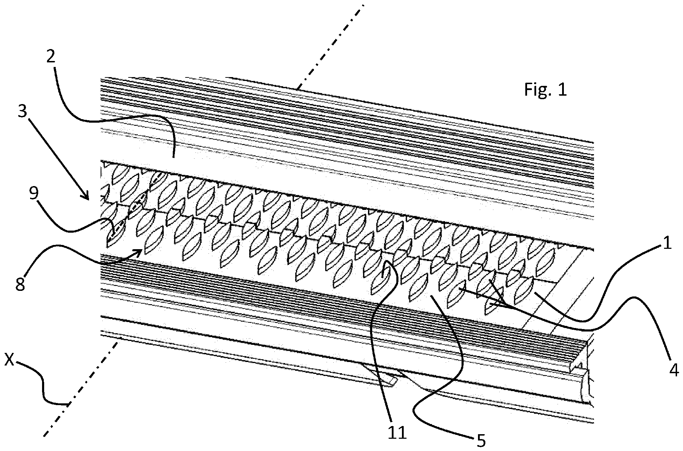

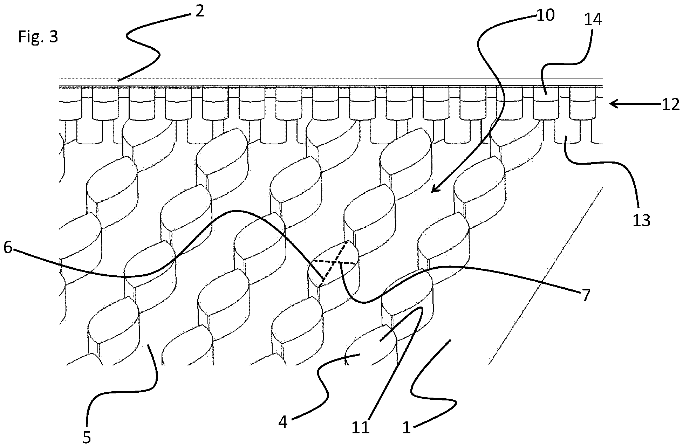

In der Fig. 1 ist ein Trittsystem für ein Fahrzeug wiedergegeben (das Fahrzeug ist nicht dargestellt), umfassend eine Trittplatte 1, die unterhalb einer Trittleistenkante 2 des Fahrzeugs entlang einer sich senkrecht zur Trittleistenkante 2 erstreckenden Ausschubachse X von einer Einschub-Stellung in Richtung einer Ausschub-Stellung und umgekehrt bewegbar ist. Die Trittplatte 1 weist eine trittbelastbare Trittfläche 3 auf, auf welcher ein Anti-Rutsch Profil ausgebildet ist, wobei das Anti-Rutsch Profil eine Mehrzahl von Profilelementen 4 aufweist. Ein jedes Profilelement 4 ist in Bezug zu einem Trittflächen-Grund 5 erhaben und weist entlang einer jeweiligen Profilelement-Längsachse 6 eine größere Länge auf als entlang einer senkrecht zur Profilelement-Längsachse 6 und parallel zum Trittflächen-Grund 5 verlaufenden Profilelement-Querachse 7 (dieser Zusammenhang ist in Fig. 3 im Detail dargestellt).

Wie insbesondere in der Fig. 1 gut zu erkennen, sind die Profilelemente 4 in Reihen 8 angeordnet. Eine jede Reihe 8 weist eine Reihenachse 9 auf, entlang welcher eine Mehrzahl von Profilelementen 4 fluchtend hintereinander angeordnet sind. Die Reihenachsen 9 erstrecken sich parallel zur Ausschubachse X Die Profilelemente 4 nebeneinander angeordneter Reihen 8 sind in einem Reihenabstand zueinander angeordnet. Der Reihenabstand ist definiert als der in einer Richtung senkrecht zur Ausschubachse X geringste Abstand zwischen den Profilelementen 4 zweier benachbarter Reihen 8 in Bezug auf sich gegenüberliegende Außenkanten der Profilelemente 4. Mit anderen Worten definiert sich der Reihenabstand als der geringste Abstand (Breite) des zwischen zwei benachbarten Reihen 8 von Profilelementen 4 vorliegenden Zwischenraums 10. In dem hier gezeigten Ausführungsbeispiel sind die in einer jeweiligen Reihe 8 fluchtend hintereinander angeordneten Profilelemente 4 in einem Abstand zueinander angeordnet (vgl. Fig. 1, 3). Gleichwohl können die Profilelemente 4 auch unmittelbar aneinander angrenzend angeordnet sein.

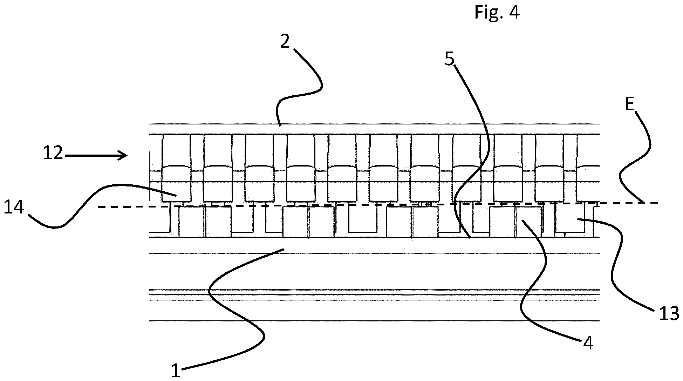

Die Profilelemente 4 weisen jeweils eine trittbelastbare Profilelement-Trittfläche 11 in Form einer spitzen Ellipse auf. Ferner spannen die Profilelemente 4 mit ihren jeweiligen Profilelement-Trittflächen 11 eine zum Trittflächen-Grund 5 parallele Profilelement-Trittflächen-Ebene E auf (Fig. 3, 4). In zueinander benachbarten Reihen 8 angeordnete Profilelemente 4 sind längsversetzt angeordnet.

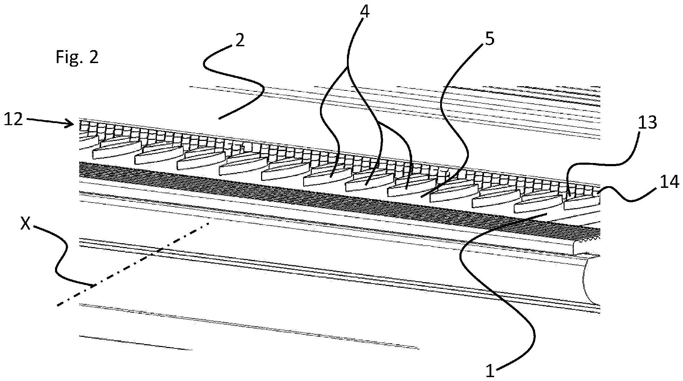

Wie in den Figuren 2, 3 und 4 gezeigt, ist an der Trittleistenkante 2 eine Bürstenstruktur 12 angeordnet, die Bürstenelemente 13, 14 aufweist, welche dazu eingerichtet sind, beim Bewegen der Trittplatte 1 entlang der Ausschubachse X die Trittfläche 3 der Trittplatte 1 zu reinigen. Die Bürstenstruktur 12 weist erste Bürstenelemente 13 und zweite Bürstenelemente 14 auf, wobei die ersten Bürstenelemente 13 in Richtung der Trittplatte 1 eine erste Länge aufweisen, und wobei die zweiten Bürstenelemente 14 in Richtung der Trittplatte 1 eine zweite Länge aufweisen, wobei die erste und zweite Länge voneinander abweichen. Die ersten Bürstenelemente 13 können dazu ausgebildet sein, beim Bewegen der Trittplatte 1 entlang der Ausschubachse X den Trittflächen-Grund 5 zu kontaktieren (also reinigend über den Trittflächen-Grund 5 zu schleifen bzw. zu kehren). Ferner können die zweiten Bürstenelemente 14 dazu ausgebildet sein, beim Bewegen der Trittplatte 1 entlang der Ausschubachse X die Profilelement-Trittflächen 11 zu kontaktieren (also über die Profilelement-Trittflächen 11 zu schleifen bzw. zu kehren).

Gleichwohl können die ersten Bürstenelemente 13 derart ausgebildet und angeordnet sein, dass deren untere Enden in einem geringen Abstand zu dem Trittflächen-Grund 5 angeordnet sind, d. h. nicht über den Trittflächen-Grund 5 schleifen. Gleiches kann für die zweiten Bürstenelemente 14 in Bezug zu den Profilelement-Trittflächen 11 gelten, d. h. die zweiten Bürstenelemente 14 können mit ihren jeweiligen unteren Enden in einem geringen Abstand zu den Profilelement-Trittflächen 11 angeordnet sein, d. h. nicht über die Profilelement-Trittflächen 11 schleifen. Sind zu entfernende Partikel (Schmutzpartikel, Steine, Split) größer als der genannte Abstand, so können diese Partikel trotzdem von den Bürstenelementen 13, 14 entfernt und mitgenommen werden.

Wie in Fig. 3 gezeigt, sind die ersten und zweiten Bürstenelemente 13, 14 jeweils in sich senkrecht zur Ausschubachse X erstreckenden Bürstenelement-Reihen angeordnet, wobei die ersten Bürstenelemente 13 in einer ersten (hier hinteren) Bürstenelement-Reihe und die zweiten Bürstenelemente 14 in einer zweiten Bürstenelement-Reihe (hier vorderen) angeordnet sind. Die ersten Bürstenelemente 13 und 14 sind bezogen auf die zugehörige Erstreckungsrichtung der Bürstenstruktur 12 senkrecht zur Ausschubachse X versetzt angeordnet. Dies meint, dass die in den jeweiligen Bürstenelement-Reihen angeordneten ersten und zweiten Bürstenelemente 13, 14 nicht unmittelbar hintereinander, sondern leicht versetzt angeordnet sind, beispielsweise um einen halben Durchmesser (bzw. einen halben Borstendurchmesser) der Bürstenelemente 13, 14. Die ersten Bürstenelemente 13 und die zweiten Bürstenelemente 14 sind in Form von Borsten ausgebildet (vgl. Fig. 2 bis 4). Die ersten Bürstenelemente 13 weisen einen Borstendurchmesser auf, der kleiner oder gleich dem Reihenabstand nebeneinander angeordneter Profilelemente 4 ist. So können ein oder mehrere (vgl. Fig. 3, 4) erste Bürstenelemente den Zwischenraum 10 zwischen den Profilelementen 4 reinigen bzw. abkehren.

### Bezugszeichenliste

- 1: Trittplatte
- 2: Trittleistenkante
- 3: Trittfläche
- 4: Profilelement
- 5: Trittflächen-Grund
- 6: Profilelement-Längsachse
- 7: Profilelement-Querachse
- 8: Reihe
- 9: Reihenachse
- 10: Zwischenraum
- 11: Profilelement-Trittfläche
- 12: Bürstenstruktur
- 13: erste Bürstenelemente
- 14: zweite Bürstenelemente

- E: Profilelement-Trittflächen-Ebene
- X: Ausschubachse

## Patentansprüche

1. Fahrzeug mit einem Trittsystem, das Trittsystem umfassend eine Trittplatte (1), die unterhalb einer Trittleistenkante (2) des Fahrzeugs entlang einer sich senkrecht zur Trittleistenkante (2) erstreckenden Ausschubachse (X) von einer Einschub-Stellung in Richtung einer Ausschub-Stellung und umgekehrt bewegbar ist, wobei die Trittplatte (1) eine trittbelastbare Trittfläche (3) aufweist, auf welcher ein Anti-Rutsch Profil ausgebildet ist, wobei das Anti-Rutsch Profil eine Mehrzahl von Profilelementen (4) aufweist, wobei ein jedes Profilelement (4) in Bezug zu einem Trittflächen-Grund (5) erhaben ist und entlang einer jeweiligen Profilelement-Längsachse (6) eine größere Länge aufweist als entlang einer senkrecht zur Profilelement-Längsachse (6) und parallel zum Trittflächen-Grund (5) verlaufenden Profilelement-Querachse, wobei die Profilelemente (4) in Reihen (8) angeordnet sind und eine jede Reihe eine Reihenachse (9) aufweist, entlang welcher eine Mehrzahl von Profilelementen (4) fluchtend hintereinander angeordnet sind(7), **dadurch gekennzeichnet, dass**
- sich die Reihenachsen der Reihen (8) und die Profilelement-Längsachsen (6) parallel zur Ausschubachse (X) erstrecken,
- an der Trittleistenkante (2) eine Bürstenstruktur (12) angeordnet ist, die Bürstenelemente (13, 14) aufweist, welche dazu eingerichtet sind, beim Bewegen der Trittplatte (1) entlang der Ausschubachse (X) die Trittfläche (3) der Trittplatte (1) zu reinigen, und
- die Bürstenstruktur (12) erste Bürstenelemente (13) und zweite Bürstenelemente (14) aufweist, wobei die ersten Bürstenelemente (13) in Richtung der Trittplatte (1) eine erste Länge aufweisen, und wobei die zweiten Bürstenelemente (14) in Richtung der Trittplatte (1) eine zweite Länge aufweisen, wobei die erste und zweite Länge voneinander abweichen.

2. Fahrzeug nach Anspruch 1, wobei die Profilelemente (4) nebeneinander angeordneter Reihen (8) in einem Reihenabstand (A) zueinander angeordnet sind.

3. Fahrzeug nach Anspruch 2, **dadurch gekennzeichnet, dass** die in einer jeweiligen Reihe (8) fluchtend hintereinander angeordneten Profilelemente (4) in einem Abstand zueinander oder unmittelbar aneinander angrenzend angeordnet sind.

4. Fahrzeug nach einem der vorangehenden Ansprüche, **dadurch gekennzeichnet, dass** die Profilelemente (4) jeweils eine trittbelastbare Profilelement-Trittfläche (11) aufweisen, wobei die Mehrzahl der Profilelemente (4) mit ihren jeweiligen Profilelement-Trittflächen (11) eine zum Trittflächen-Grund (5) parallele Profilelement-Trittflächen-Ebene (E) aufspannen.

5. Fahrzeug nach Anspruch 4, **dadurch gekennzeichnet, dass** die Profilelement-Trittfläche (11) eines jeweiligen Profilelements (4) eine Ovalform, eine Rechteckform, eine Ellipsenform oder eine spitze Ellipsenform aufweist.

6. Fahrzeug nach einem der vorangehenden Ansprüche, **dadurch gekennzeichnet, dass** in zueinander benachbarten Reihen (8) angeordnete Profilelemente (4) längsversetzt angeordnet sind.

7. Fahrzeug nach einem der vorangehenden Ansprüche, **dadurch gekennzeichnet, dass** zueinander benachbarte Reihen (8) eine unterschiedliche Anzahl von Profilelementen (4) umfassen.

8. Fahrzeug nach Anspruch 7, **dadurch gekennzeichnet, dass** eine in Bezug auf eine Reihe (8) übernächste Reihe die gleiche Anzahl von Profilelementen (4) umfasst.

9. Fahrzeug nach einem der Ansprüche 1 bis 8, wobei die ersten Bürstenelemente (13) dazu ausgebildet sind, beim Bewegen der Trittplatte (1) entlang der Ausschubachse (X) den Trittflächen-Grund (5) zu kontaktieren, und wobei die zweiten Bürstenelemente (14) dazu ausgebildet sind, beim Bewegen der Trittplatte (1) entlang der Ausschubachse (X) die Profilelement-Trittflächen (11) zu kontaktieren.

10. Fahrzeug nach Anspruch 1 bis 9, wobei die ersten und zweiten Bürstenelemente (13, 14) jeweils in sich senkrecht zur Ausschubachse (X) erstreckenden Bürstenelement-Reihen angeordnet sind, wobei die ersten Bürstenelemente (13) in einer ersten Bürstenelement-Reihe und die zweiten Bürstenelemente (14) in einer zweiten Bürstenelement-Reihe angeordnet sind.

11. Fahrzeug nach Anspruch 10, wobei die erste Bürstenelement-Reihe und die zweite Bürstenelement-Reihe hintereinander angeordnet sind.

12. Fahrzeug nach Anspruch 10 oder 11, wobei die ersten Bürstenelemente (13) und zweiten Bürstenelemente (14) in einer oder mehreren sich senkrecht zur Ausschubachse erstreckenden Bürstenelement-Reihe(n) gemeinsam angeordnet sind, wobei die ersten und zweiten Bürstenelemente (13, 14) in einer jeweiligen Bürstenelement-Reihe alternierend angeordnet sind.

13. Fahrzeug nach einem der vorangehenden Ansprüche, wobei die ersten Bürstenelemente (13) und die zweiten Bürstenelemente (14) in Form von Borsten ausgebildet sind.

14. Fahrzeug nach Anspruch 13, wobei die ersten Bürstenelemente einen Borstendurchmesser aufweisen, der kleiner oder gleich dem Reihenabstand (A) nebeneinander angeordneter Profilelemente ist.

## Claims

1. A vehicle with a tread system, the tread system comprising a tread plate (1) which is
movable beneath a tread strip edge (2) of the vehicle along an extension axis (X) extending perpendicular to the tread strip edge (2) from a retracted position towards an extended position and vice versa, wherein the tread plate (1) has a treadable tread surface (3) on which an anti-slip profile is formed, wherein the anti-slip profile comprises a plurality of profile elements (4), wherein each profile element (4) is raised relative to a tread surface base (5) and has a greater length along a respective profile element longitudinal axis (6) than that along a profile element transverse axis extending perpendicular to the profile element longitudinal axis (6) and parallel to the tread surface base (5), wherein the profile elements (4) are arranged in rows (8) and each row has a row axis (9) along which the plurality of profile elements (4) are arranged in alignment one behind the other (7), **characterized in that**
- the row axes of the rows (8) and the profile element longitudinal axes (6) extend parallel to the extension axis (X),
- a brush structure (12) is arranged at the tread strip edge (2), comprising brush elements (13, 14) configured to clean the tread surface (3) of the tread plate (1) as the tread plate (1) moves along the extension axis (X), and
- the brush structure (12) comprises first brush elements (13) and second brush elements (14), wherein the first brush elements (13) have a first length in a direction of the tread plate (1), and wherein the second brush elements (14) have a second length in the direction of the tread plate (1), wherein the first and second lengths differ from one another.

2. The vehicle according to claim 1, wherein the profile elements (4) of adjacently arranged rows (8) are arranged at a row spacing (A) from one another.

3. The vehicle according to claim 2, **characterized in that** the profile elements (4) arranged in alignment one behind the other in a respective row (8) are arranged at a distance from one another or immediately adjacent to one another.

4. The vehicle according to any one of the preceding claims, **characterized in that** the profile elements (4) each have a treadable profile element tread surface (11), wherein the plurality of profile elements (4) span, with their respective profile element tread surfaces (11), a profile element tread surface plane (E) parallel to the tread surface base (5).

5. The vehicle according to claim 4, **characterized in that** the profile element tread surface (11) of a respective profile element (4) has an oval shape, a rectangular shape, an elliptical shape, or an acute elliptical shape.

6. The vehicle according to any one of the preceding claims, **characterized in that** the profile elements (4) arranged in mutually adjacent rows (8) are arranged in a longitudinally offset manner.

7. The vehicle according to any one of the preceding claims, **characterized in that** the mutually adjacent rows (8) comprise a different number of profile elements (4).

8. The vehicle according to claim 7, **characterized in that** a row that is the next-but-one row relative to a given row (8) comprises the same number of profile elements (4).

9. The vehicle according to any one of claims 1 to 8, wherein the first brush elements (13) are configured to contact the tread surface base (5) when the tread plate (1) moves along the extension axis (X), and wherein the second brush elements (14) are configured to contact the profile element tread surfaces (11) when the tread plate (1) moves along the extension axis (X).

10. The vehicle according to claims 1 to 9, wherein the first and second brush elements (13, 14) are each arranged in rows of brush elements extending perpendicular to the extension axis (X), wherein the first brush elements (13) are arranged in a first row of brush elements and the second brush elements (14) are arranged in a second row of brush elements.

11. The vehicle according to claim 10, wherein the first row of brush elements and the second row of brush elements are arranged one behind the other.

12. The vehicle according to claim 10 or 11, wherein the first brush elements (13) and the second brush elements (14) are arranged together in one or more rows of brush elements extending perpendicular to the extension axis, wherein the first and second brush elements (13, 14) are arranged alternately within a respective row of brush elements.

13. The vehicle according to any one of the preceding claims, wherein the first brush elements (13) and the second brush elements (14) are configured as bristles.

14. The vehicle according to claim 13, wherein the first brush elements have a bristle diameter that is less than or equal to the row spacing (A) of adjacently arranged profile elements.

## Revendications

1. Véhicule comportant un système de marchepied, ledit système de marchepied comprenant une plaque de marchepied (1), laquelle
est déplaçable en dessous d'un bord de moulure de marchepied (2) du véhicule le long d'un axe de déploiement (X) s'étendant perpendiculairement au bord de moulure de marchepied (2) d'une position rétractée vers une position déployée et inversement, la plaque de marchepied (1) présentant une surface de marchepied (3) apte à supporter une charge, sur laquelle est formé un profil antidérapant, le profil antidérapant présentant une pluralité d'éléments de profil (4), chaque élément de profil (4) étant surélevé par rapport à une base de surface de marche (5) et présentant une longueur supérieure le long d'un axe longitudinal d'élément de profil (6) respectif que le long d'un axe transversal s'étendant perpendiculaire à l'axe longitudinal d'élément de profil (6) et parallèle à la base de surface de marche (5), les éléments de profil (4) étant disposés en rangées (8) et chaque rangée présentant un axe de rangée (9), le long duquel la pluralité d'éléments de profil (4) sont disposés alignés les uns derrière les autres (7), **caractérisé en ce que**
- les axes de rangées des rangées (8) et les axes longitudinaux d'élément de profilé (6) s'étendent parallèle à l'axe de déploiement (X),
- une structure de brosse (12) est disposée au niveau du bord de moulure de marchepied (2), qui présente des éléments de brosse (13, 14), lesquels sont configurés pour nettoyer la surface de marche (3) de la plaque de marchepied (1) lors du déplacement de la plaque de marchepied (1) le long de l'axe de déploiement (X), et
- la structure de brosse (12) présente des premiers éléments de brosse (13) et des deuxièmes éléments de brosse (14), les premiers éléments de brosse (13) présentant une première longueur dans la direction de la plaque de marchepied (1), et les deuxièmes éléments de brosse (14) présentant une deuxième longueur dans la direction de la plaque de marchepied (1), la première et deuxième longueur différent l'une de l'autre.

2. Véhicule selon la revendication 1, dans lequel les éléments de profil (4) sont disposés en rangées (8) disposées les unes à côté des autres à une distance de rangée (A) les unes des autres.

3. Véhicule selon la revendication 2, **caractérisé en ce que** les éléments de profil (4) disposés alignés les uns derrière les autres dans une rangée (8) respective sont disposés à une distance les uns des autres ou immédiatement adjacents les uns aux autres.

4. Véhicule selon l'une quelconque des revendications précédentes, **caractérisé en ce que** les éléments de profil (4) présentent respectivement une surface de marche d'élément de profil (11) apte à supporter une charge, la pluralité des éléments de profil (4) fixant avec leur surfaces de marche d'élément de profil (11) respectives un plan de surface de marche d'élément de profil (E) parallèle à la base de surface de marche (5).

5. Véhicule selon la revendication 4, **caractérisé en ce que** la surface de marche d'élément de profil (11) d'un élément de profil (4) respectif présente une forme ovale, une forme rectangulaire, une forme elliptique ou une forme elliptique pointue.

6. Véhicule selon l'une quelconque des revendications précédentes, **caractérisé en ce que** les éléments de profil (4) disposés dans des rangées (8) voisines les unes des autres sont disposés avec un décalage longitudinal.

7. Véhicule selon l'une quelconque des revendications précédentes, **caractérisé en ce que** des rangées (8) voisines les unes des autres comprennent un nombre différent d'éléments de profil (4).

8. Véhicule selon la revendication 7, **caractérisé en ce qu'**une deuxième rangée suivante par rapport à une rangée (8) comprend le même nombre d'éléments de profil (4).

9. Véhicule selon l'une quelconque des revendications 1 à 8, dans lequel les premiers éléments de brosse (13) sont conçus pour entrer en contact avec la base de surface de marche (5) lors d'un déplacement de la plaque de marchepied (1) le long de l'axe de déploiement (X), et dans lequel les deuxièmes éléments de brosse (14) sont conçus pour entrer en contact avec les surfaces de marche d'éléments de profil (11) lors d'un déplacement de la plaque de marchepied (1) le long de l'axe de déploiement (X).

10. Véhicule selon les revendications 1 à 9, dans lequel les premiers et deuxièmes éléments de brosse (13, 14) sont disposés respectivement dans des rangées d'éléments de brosse s'étendant perpendiculairement à l'axe de déploiement (X), dans lequel les premiers éléments de brosse (13) sont disposés dans une première rangée d'éléments de brosse et les deuxièmes éléments de brosse (14) sont disposés dans une deuxième rangée d'éléments de brosse.

11. Véhicule selon la revendication 10, dans lequel la première rangée d'éléments de brosse et la deuxième rangée d'éléments de brosse sont disposées l'une derrière l'autre.

12. Véhicule selon la revendication 10 ou 11, dans lequel les premiers éléments de brosse (13) et les deuxièmes éléments de brosse (14) sont disposés ensemble dans une ou plusieurs rangées d'éléments de brosse s'étendant perpendiculairement à l'axe de déploiement, dans lequel les premiers et deuxièmes éléments de brosse (13, 14) sont disposés en alternance dans une rangée d'éléments de brosse respective.

13. Véhicule selon l'une quelconque des revendications précédentes, dans lequel les premiers éléments de brosse (13) et les deuxièmes éléments de brosse (14) sont réalisés sous la forme de poils.

14. Véhicule selon la revendication 13, dans lequel les premiers éléments de brosse présentent un diamètre de poil qui est inférieur ou égal à la distance de rangée (A) d'éléments de profil disposés les uns à côté des autres.
